**Europäisches Patentamt**

**European Patent Office**

**Office européen des brevets**

(19)

(11) Veröffentlichungsnummer : **0 426 745 B1**

(12)

# EUROPÄISCHE PATENTSCHRIFT

(45) Veröffentlichungstag der Patentschrift :
**17.06.92 Patentblatt 92/25**

(51) Int. Cl.⁵ : **B60K 23/02,** B60K 41/22,
F16D 25/14

(21) Anmeldenummer : **89908996.5**

(22) Anmeldetag : **26.07.89**

(86) Internationale Anmeldenummer :
**PCT/EP89/00878**

(87) Internationale Veröffentlichungsnummer :
**WO 90/01431 22.02.90 Gazette 90/05**

(54) VERFAHREN UND EINRICHTUNG ZUR STEUERUNG EINER KUPPLUNG.

(30) Priorität : 30.07.88 DE 3826068

(43) Veröffentlichungstag der Anmeldung :
**15.05.91 Patentblatt 91/20**

(45) Bekanntmachung des Hinweises auf die
Patenterteilung :
**17.06.92 Patentblatt 92/25**

(84) Benannte Vertragsstaaten :
**DE FR GB SE**

(56) Entgegenhaltungen :
**DE-A- 3 627 958**
**Patent Abstracts of Japan, Band 7, nr. 1, M183,**
**abstract from JP 57-160723, veröffentl. 04-**
**10-1982 AISHINSEIKI K.K.**

(73) Patentinhaber : **ZF FRIEDRICHSHAFEN**
**Aktiengesellschaft**
**Löwentaler Strasse 100 Postfach 2520**
**W-7990 Friedrichshafen 1 (DE)**

(72) Erfinder : **SCHWAB, Manfred**
**Schubertstrasse 34**
**W-7990 Friedrichshafen (DE)**
Erfinder : **RUNGE, Wolfgang**
**Goethestrasse 17**
**W-7980 Ravensburg (DE)**
Erfinder : **GRUHLE, Wolf-Dieter**
**Grabenstrasse 12**
**W-7992 Tettnang (DE)**

## Beschreibung

Die Erfindung betrifft ein Verfahren und eine Vorrichtung zur Steuerung einer Kupplung nach dem Oberbegriff von Anspruch 1.

Aus der DE-A 36 27 958 ist eine Steuereinrichtung für eine Kupplung bekannt, in der über Sensoren die Motordrehzahl sowie die Getriebeeingangsdrehzahl erfaßt und in einer elektronischen Kupplungssteuerung zur Schlupfbeeinflussung der Kupplung verarbeitet werden.

Üblicherweise ist bei Getriebesteuerungen, insbesondere an PKW-Automatgetrieben, die mit der Kupplungsbtriebsdrehzahl übereinstimmende Getriebeeingangsdrehzahl nicht direkt bekannt, da keine geeigneten Sensoren an der Abtriebswelle der Kupplung oder bei Automatgetrieben an der Turbienenwelle des hydrodynamischen Drehmomentwandlers angeordnet sind. Für die Getriebesteuerung wird nämlich die Getriebeeingangsdrehzahl nicht als Parameter herangezogen. Die bekannte Steuereinrichtung weist neben den erwähnten Sensoren einen Fahrzeuggeschwindigkeitsfühler und einen Getriebestellungsfühler auf. Aufgrund der Daten dieser beiden Führer wird ermittelt, ob sich das Fahrzeug in einem startbereiten Zustand befindet.

Es ist deshalb Aufgabe der Erfindung, eine Steuereinrichtung für eine Kupplung nach dem Oberbegriff von Anspruch 1 so weiterzuentwickeln, daß sich auch ohne Kenntnis der Kupplungsabtriebsdrehzahl eine gute Schaltqualität ohne Komforteinbußen bzw. ohne Durchdrehen des Motors ergibt.

Diese Aufgabe wird mit den Merkmalen der Ansprüche 1, 6, 7 gelöst.

Mit der Vorgabe bestimmter Parameter für die Druckbeeinflussung des Kupplung kann zum Beispiel der Druck mit Beginn der Schaltung abgesenkt und für die Dauer der Schaltung konstant gehalten werden. Dadurch wird der Schlupf erhöht und der Schaltkomfort verbessert. Es ist aber auch möglich, zu einer weiteren Verbesserung diese Absenkung lastabhängig für die gesamte Zeitdauer der Schaltung zu beeinflussen. Während diese einfachen Lösungen ohne Rückmeldung von gemessenen Größen wirken, können höhere Ansprüche durch die Ermittlung einer virtuellen Kupplungsabtriebsdrehzahl befriedigt werden, die dann in Verbindung mit der immer vorhandenen Motordrehzahl zu einer Schlupfregelung während des Schalvorganges verwendet werden kann. Mit beiden prinzipiellen Möglichkeiten läßt sich deshalb der Schlupf der Kupplung und damit die Qualität der Schaltung beeinflussen.

Wird die bei Einleitung einer Gangschaltung immer vorhandene Totzeit, die bis zum Wirken der Schaltelemente - Füllzeit - immer vorhanden ist, zum Absenken des Kupplungsdruckes auf einen vorgegebenen Schlupf benutzt, und wird dann dieser Schlupf konstant gehalten, ist die Schaltverbesserung mit einfachen Mitteln zu verwirklichen. Durch eine zeitabhängige oder auch lastabhängige Steuerung des Druckes kann die Anpassung an den folgenden Einregelvorgang in den neuen Gang bei relativ geringem Aufwand weiter verbessert werden, wobei die Laständerungen in Abhängigkeit des Momentes, der Momentänderung oder auch der Stellung, z. B. der Drosselklappe, variiert werden kann.

Die Schlupfregelung, die, während ein Gang eingelegt ist, mit den Werten der immer vorhandenen Motordrehzahl und der aus der Getriebeabtriebsdrehzahl und der Gangübersetzung errechneten Kupplungsabtriebsdrehzahl erfolgt, kann durch die Ermittlung einer virtuellen Kupplungsabtriebsdrehzahl für die Zeit, in der kein Gang eingelegt ist, in gleicher Weise fortgeführt werden. In vorteilhafter Weise kann dabei diese Ermittlung aus der Getriebeabtriebsdrehzahl und einer virtuellen Gangübersetzung erfolgen, die in einer weiteren Ausgestaltung aus der alten und der neuen Übersetzung und nach einer Übergangszeitfunktion berechnet wird. Die Erfindung wird in vorteilhafter Weise durch die Merkmale der abhängigen Ansprüche weiter ausgestaltet. Für eine weitere Verbesserung der Schaltung kann im Zusammenhang mit der virtuellen Gangübersetzung der Schlupf-Sollwert, der bei einem eingelegten Gang in die Schlupfregelung eingeht, zusätzlich höher gesetzt werden. Dies kann zeitlich für eine weitere Verbesserung, aber auch lastabhängig erfolgen. Eine weitere Optimierung ist möglich, wenn die Übergangszeitfunktion lastabhängig verändert wird.

Zur weiteren Erläuterung der Erfindung wird auf die Zeichnung verwiesen.

Es zeigen:

Fig. 1 ein Blockschaltbild des Antriebsstranges mit dem Kupplungs- bzw. Wandlerkupplungs-Schlupfregelkreis

Fig. 2 ein Blockschaltbild der Drucksteuerung für die Kupplung/Wandlerüberbrückungskupplung

Fig. 3 ein Diagramm vom Druck für die Kupplungs bzw. Wandlerkupplungsbetätigung während einer Gangschaltung, aufgetragen über der Zeit

Fig. 4 die Übersetzung im Getriebe vor und nach einer Hochschaltung, aufgetragen über der Zeit.

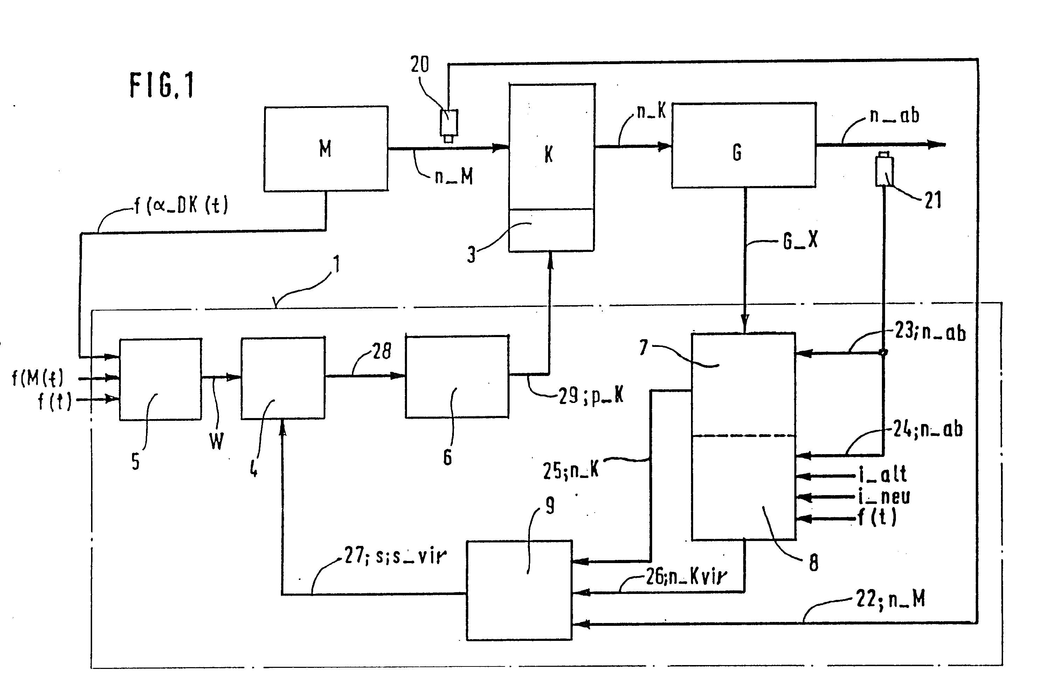

In Fig. 1 ist mit M der Antriebsmotor, K die Kupplung, die sowohl als Trennkupplung in einem Antriebsstrang oder als Wandler-Überbrückungskupplung ausgebildet sein kann und in der Folge nur mit Kupplung benannt wird sowie das Getriebe mit G bezeichnet. Zur Erfassung der Motordrehzahl $n_M$ sowie der Getriebeabtriebsdrehzahl $n_{ab}$ sind Sensoren 20, 21 angeordnet. Ein Stellantrieb 3 ist mit der Kupplung K verbunden und in bekannter Weise bei einer Trennkupplung als Betätigungseinheit ausgeführt, die über einen Kupplungsein-

EP 0 426 745 B1

oder ausrückhebel und über den Ausrücker oder das Ausrücklager diese Kupplung betätigt. Bei einer Überbrückungskupplung WK für eine hydrodynamische Einheit, z, B. einen hydrodynamischen Drehmomentwandler, ist der Stellantrieb vorrangig als Druckkolbeneinheit ausgeführt, so daß der Druck $p\_K$ für die Kupplungsbetätigung direkt über den Kolben auf die zum Beispiel Lamellenkupplung wirkt. Mit der Überbrückungskupplung wird die Turbine und die Pumpenwelle der hydrodynamischen Einheit in bekannter Weise vorrangig mit einer Einlamellenkupplung überbrückt.

In einer Schlupfregelschalteinrichtung 1 ist eine Berechnungseinheit 7 angeordnet, die aus der Getriebeabtriebsdrehzahl $n\_ab$, die über die Leitung 23 zugeführt wird und der Gangübersetzung $G\_x$ die Kupplungsabtriebsdrehzahl $n\_K$ bzw. $n\_WK$ errechnet. $G\_x$ ist vorrangig eine Information über den gerade eingelegten Gang, so daß die zugeordneten in der Berechnungseinheit abgespeicherten Übersetzungen $i\_Gang$ mit der Getriebeabtreibsdrehzahl multipliziert werden können.

$$n\_K \ = \ i\_Gang \ x \ n\text{-}ab$$

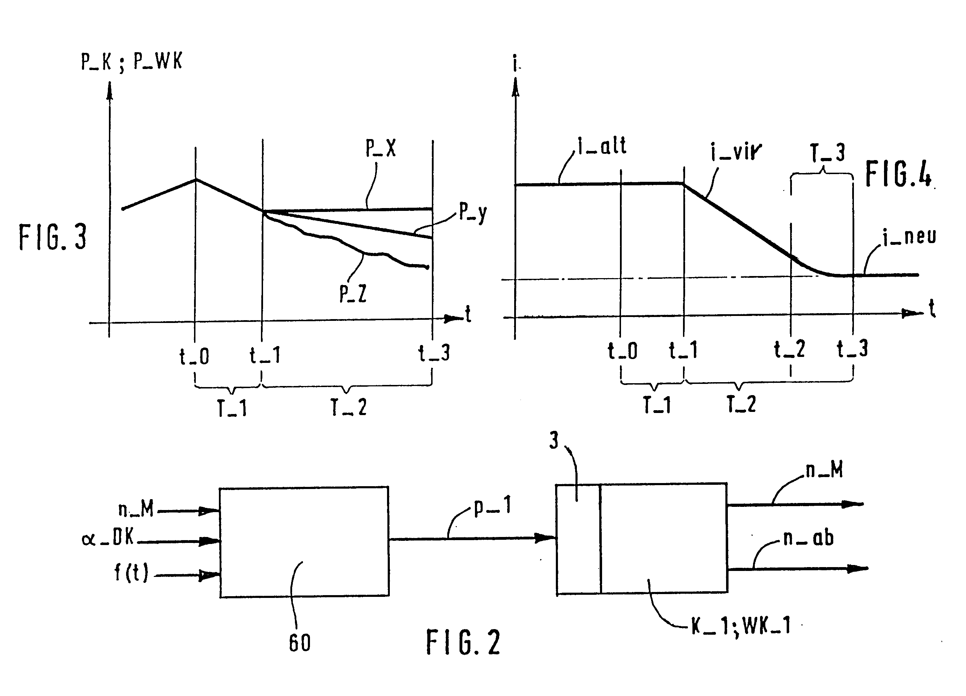

Während einer Schaltung, also in der Zeit, in der kein Gang anliegt, steht auch die entsprechende Information über die Gangübersetzung $G\_x$ nicht zur Verfügung. Allein für diese Zeitspanne ($t\_0$ bis $t\_3$ aus Fig. 3), die bei jeder Schaltung wirkt, ist eine Ermittlungseinheit 8 angeordnet, in der eine der Kupplungsabtriebsdrehzahl $n\_K$ vergleichbare virtuelle Abtriebsdrehzahl $n\_Kvir$ ermittelt wird. Aus der Getriebeabtriebsdrehzahl $n\_ab$ (Leitung 24), der Übersetzung aus dem alten Gang $i\_alt$, der neuen Gangübersetzung $i\_neu$ und einer Übergangszeitfunktion $f(t)$ wird dabei eine virtuelle Übersetzung $i\_vir$ als Zwischengröße bestimmt, wobei $f(t)$ größer 0 und kleiner 1 ist.

$$i\_vir(t) \ = \ i\_alt \ x \ f(t) \ + \ i\_neu \ x \ (1 \text{ - } f(t))$$
$$0 \text{ - } f(t) \text{ - } 1$$

Die virtuelle Kupplungsabtriebsdrehzahl ist dann

$$n\_Kvir \ = \ i\_vir \ x \ n\_ab$$

Die virtuelle Übersetzung $i\_vir$ wirkt nur, wie in Fig. 4 erkennbar, im zweiten Zeitintervall $T\_2$, weil während der Totzeit, also im ersten Zeitintervall $T\_1$, erst die Druckräume für die Kupplungsbetätigung - Gangschaltkupplung - befüllt werden. Am Ende von $T\_2$ ist ein Zeitintervall $T\_3$ vorgesehen, in dem die Anpassung an den neuen Gang eingeleitet wird, wobei der Verlauf von $i\_vir$ weich, d. h. ohne Sprünge oder Knicke, in die neue Übersetzung $i\_neu$ einläuft. In der Berechnungseinheit 9 wird der Schlupf-Istwert $s$ aus der Motordrehzahl $n\_M$ (Leitung 22) und, während ein Gang eingelegt ist, aus der errechneten Kupplungsabtriebsdrehzahl $n\_K$ (Leitung 25) bzw. während der Schaltung aus $n\_Kvir$ (Leitung 26) ermittelt.

$$s \ = \ \frac{n\_M - n\_K}{n\_M} \qquad\qquad s\_vir \ = \ \frac{n\_M - n\_Kvir}{n\_M}$$

Der so ermittelte Ist-Chlupfwert $s$; $s\_vir$ wird über die Leitung 27 dem Vergleicher 4 zugeleitet und dort mit dem Schlupf-Sollwert $w$ verglichen. Dieser kann dabei aus einem Speicher und/oder einer Vorgabeeinheit 5 abgerufen bzw. vorgegeben werden. Zur weiteren Schaltbeeinflussung kann der Schlupf-Sollwert $w$ auch zeitabhängig hochgesetzt werden, z. B. $w = w\_normal + w\_Schalt(t)$ für $t\_0 < t < t\_3$, wobei das zeitabhängige Hochsetzen auch lastabhängig erfolgen kann, $w\_Schalt(t) = f(last(t))$, z. B. in Abhängigkeit vom Motormoment bzw. der Momentänderung oder einer bei Dieselmotoren vergleichbaren Motorleistungssteuerung: Die Lastabhängigkeit des Schaltübergangs kann zusätzlich auch in Verbindung mit der Übergangszeitfunktion, d. h. $i\_vir(t)$, bewirkt werden, wobei der zeitliche Verlauf der Übergangs fest vorgegeben oder lastabhängig variiert werden kann.

Die Regelabweichung aus dem Vergleich vom Sollwert $w$ und Istwert $s$ des Schlupfes wird über die Leitung 28 dem Regler 6 zugeführt. Dieser steuert nach einem festgelegten Regelalgorithmus den Druck $p\_K$, der über den Stellantrieb 3 sowohl einer Trennkupplung in einem Antriebsstrang wie auch eine Wandlerüberbrückungskupplung in einen Drehmomentwandler steuern kann. Für weniger anspruchsvolle Lösungen ist es auch möglich, die Druckregulierung zur Kupplungsbetätigung während der Schaltung mit noch geringerem Aufwand in Form einer Drucksteuerung durchzuführen. In einer solchen Einrichtung nach Fig. 2 wird über eine Steuereinrichtung 60 dem Stellantrieb 3 der Trenn- oder Überbrückungskupplung $K\_1$; $WK\_1$ der Druck $p\_1$ zur Umsteuerung zugeleitet, der nach festgelegten Merkmalen ermittelt wurde. Es erfolgt keine Rückmeldung durch gemessene Größen.

In einem ersten Zeitintervall $T\_1$ nach Fig. 3, also in der Totzeit, in der die Kupplungen für die Gangschaltung befüllt werden, wird ein bestimmter zum Beispiel höherer Schlupf infolge eines geringeren Druckes $p\_1$ eingestellt, der dann in einem zweiten Zeitintervall $T\_2$, bis wieder ein Gang eingelegt ist ($t\_3$), konstant gehalten wird $p\_x$. Im zweiten Zeitintervall $T\_2$ kann aber zur besseren Anpassung an den folgenden Einregelvorgang, der mit dem neu eingelegten Gang beginnt, eine zeitlich gesteuerte Veränderung des Druckes $p\_y$ erfolgen. Zur besseren Anpassung an die Laständerungen während des Schaltvorganges kann anstelle der zeitlichen Variation der Druckausgleich auch in Abhängigkeit vom Motormoment

$$p\_K \ = \ f(M(t))$$

3

oder der Momentänderung erfolgen.

$$p\_K = f(M(t\_1) - M(t)$$

Die Anpassung an die Laständerungen kann über einen Druck, der in Abhängigkeit der Drosselklappenstellung oder einer bei Dieselmotoren vergleichbaren Motorleistungssteuerung variiert wird, erfolgen.

$$p\_K = f(\alpha\_DK(t))$$

Zur Erfüllung dieser Lösung ist es erforderlich, vom Antriebsmotor M zur Steuereinrichtung 60 eine Leitung anzuordnen zur Übertragung der benötigten Information.

Ziel dieser Funktion ist, den Kupplungsdruck p_K und damit das Übertragbare Moment, an das vom Antriebsmotor M abgegebene Moment anzupassen, wobei diese Anpassung über die Drosselklappenstellung $\alpha\_DK(t)$, das Moment M(t) oder die Momentenänderung M(t_1) - M(t) erfolgen kann. Auf diese Weise wird erreicht, daß bei instationären Laständerungen während der Schaltung keine zu großen Abweichungen vom Sollzustand entstehen.

Aus Fig. 3, in der der Druck für die Kupplungsbetätigung p_K, p_WK über der Zeit t bei einer Schaltung aufgetragen ist, beginnt die Schaltung bei t_0. In dem Zeitintervall T_1 von t_0 bis t_1 ergibt sich eine Totzeit, in der zum Beispiel die Befüllung der Kolbenräume vom Stellantrieb einer Kupplung, die den Gangwechsel bewirkt, erfolgt. In dieser Zeit wird ein bestimmter Druck eingestellt, zum Beispiel ein abgesenkter Druck, der den Schlupf erhöht. In einem zweiten Zeitintervall T_2 von t_1 bis t_3 wird dieser eingestellte Druck entweder konstant gehalten P_x(p_K = konstant) zeitlich gesteuert P_y(p_K = f(t)) oder wie bereits beschrieben lastabhängig variiert P_z(p_K = f(M; $\alpha$_M; $\alpha$_DK)). Der Druck in der Zeit t vor t_0 entspricht dabei dem alten und in der Zeit nach t_3 dem neuen Gang.

Zur Ermittlung der virtuellen Kupplungsabtriebsdrehzahl n_Kvir in der Ermittlungseinheit 8 wird zunächst wie beschrieben eine virtuelle Übersetzung i_vir gebildet. Während einer Schaltung ergibt sich dabei eine Veränderung der Übersetzung nach Fig. 4. Im ersten Zeitintervall T_1 gilt noch wie im alten Gang die alte Übersetzung, weil erst nach einer Totzeit die Schaltkupplungen wirken. Für ein zweites Schaltintervall T_2 zwischen t_1 und t_3 wird dann eine virtuelle Übersetzung, wie schon beschrieben, gebildet.

<u>Bezugszeichen</u>

| | |
|---|---|
| M | Antriebsmotor |
| G | Gangschaltgetriebe |
| G_x | Gangübersetzung |
| K; K_1 | Kupplung/Trennkupplung |
| WK; WK_1 | Wandlerüberbrückungskupplung |
| w | Schlupf-Sollwert |
| s | Schlupf-Istwert |
| s_vir | virtueller Schlupf-Istwert |
| 1 | Schlupfregelschalteinrichtung |
| 20 | Sensor für Motordrehzahl |
| 21 | Sensor für Getriebeabtriebsdrehzahl |
| 22 bis 28 | Leitungen |
| 29 | Druckleitung |
| 3 | Stellantrieb für Kupplung (Druckstellantrieb) |
| 4 | Vergleicher |
| 5 | Speicher/Vorgabeeinheit |
| 6 | Regler |
| 60 | Stelleinrichtung |
| 7 | Berechnungseinheit |
| 8 | Ermittlungseinheit |
| 9 | Berechnungseinheit für Schlupf-Istwert s |
| P_x | konstanter gesteuerter Druck |
| P_y | zeitlich gesteuerter Druck |
| P_z | lastabhängig gesteuerter Druck |
| p_K | geregelter Druck für die Kupplung |

| n_M | Motordrehzahl |
|---|---|
| n_K | Kupplungsabtriebsdrehzahl |
| n_Kvir | Kupplungsabtriebsdrehzahl ermittelt |
| n_WK | Abtriebsdrehzahl der Wandlerkupplung |
| n_WKvir | ermittelte Abtriebsdrehzahl der Wandlerkupplung |
| n_ab | Getriebeabtriebsdrehzahl |
| T_1 | erstes Zeitintervall |
| T_2 | zweites Zeitintervall |
| T_3 | Zeitintervall für die Anpassung an den neuen Gang |
| t_0 | Beginn der Gangschaltung |
| t_1 | Ende der Totzeit |
| α_DK | Drosselklappensteuerung/Motorleistungssteuerung |
| t_2 | Beginn der Anpassung an den neuen Gang |
| t_3 | Ende der Gangschaltung |
| i_alt | Übersetzung alter Gang |
| i_neu | Übersetzung neuer Gang |
| i_Gang | Gangübersetzung |
| i_vir | virtuelle Gangübersetzung |

**Patentansprüche**

1. Verfahren zur Steuerung einer Kupplung, die zwischen einem Antriebsmotor (M) und einem Gangschaltgetriebe (G) eines Kraftfahrzeuges und als Überbrückungskupplung (WK) einer hydrodynamischen Einheit bzw. als Trennkupplung (K) ausgebildet ist mit Einrichtungen zur Ermittlung der Motor- (n_M) und der Getriebeabtriebsdrehzahl (n_ab) sowie mit einer Schlupfregelschalteinrichtung (1), die den Druck für einen Stellantrieb (3) der Kupplung (K) bzw. Überbrückungskupplung (WK) bestimmt, wobei aus dem Vergleich (vgl. 4) von vorgegebenen Schlupf-Sollwerten (w) und den aus den Drehzahlen ermittelten Schlupf-Istwerten (s) die Redelabweichungen ermittelt und nach einem vorgegebenen Regelalgorithmus (Regler 6) in Drücke umgesetzt wird, dadurch **gekennzeichnet**, daß eine für die Schlupfermittlung notwendige Kupplungsabtriebsdrehzahl (n_K, n_WK) über eine Gangübersetzung (G_x) des Gangschaltgetriebes (G) und dessen Getriebeabtriebsdrehzahl (n_ab) ermittelt wird und während eines Schaltvorganges (t_0 - t_3) ohne feste Gangübersetzung eine Ansteuerung der Kupplung aufgrund einer virtuellen Kupplungsdrehzahl n_Kvir erfolgt, wozu eine virtuelle Übersetzung i_vir (t) = i_alt x f(t) + i_neu x (1 - f(t)) als Zwischengröße bestimmt wird, wobei i_alt die Übersetzung des alten Ganges, i_neu die Übersetzung des neuen Ganges und f(t) eine Übergangszeitfunktion ist, die im Verlauf der Gangschaltung (t_0 - t_3) von 1 auf 0 abfällt.

2. Verfahren nach Anspruch 1, dadurch **gekennzeichnet**, daß der Schlupf-Sollwert (w) während des Schaltvorganges (t_0 - t_3) zeitabhängig hochgesetzt wird.

3. Verfahren nach Anspruch 1, dadurch **gekennzeichnet**, daß der Schlupf-Sollwert (w) während des Schaltvorganges (t_0 - t_3) lastabhängig angehoben wird.

4. Verfahren nach Anspruch 1, dadurch **gekennzeichnet**, daß die Übergangszeitfunktion (f(t)) lastabhängig verändert wird.

5. Steuereinrichtung nach Anspruch 1, dadurch **gekennzeichnet**, daß zur Berechnung der Kupplungsabtriebsdrehzahl (n_K) aus der Gangübersetzung (i_Gang) und der Getriebeabtriebsdrehzahl (n_ab) eine Berechnungseinheit (7) und zur Ermittlung der virtuellen Kupplungsabtriebsdrehzahl (n_Kvir) eine Ermittlungseinheit (8) angeordnet ist, die diese aus der Getriebeabtriebsdrehzahl (n_ab), den Übersetzungen des alten (i_alt) und des neuen Ganges (i_neu) und eine Übergangszeitfunktion (f(t)) ermittelt, wenn das Signal für die Gangübersetzung (G_x) nicht zur Verfügung steht.

6. Verfahren zur Steuerung einer Kupplung, die zwischen einem Antriebsmotor (m) und einem Gangschaltgetriebe (G) eines Kraftfahrzeuges und als Überbrückungskupplung (WK) einer hydrodynamischen Einheit bzw. als Trennkupplung (K) ausgebildet ist mit Einrichtungen zur Ermittlung der Motor- (n_M) und der Getriebeabtriebsdrehzahl (n_ab) sowie mit einer Schlupfregelschalteinrichtung (1), die den Druck für einen Stellantrieb (3) der Kupplung (K) bzw. Überbrückungskupplung (WK) bestimmt, wobei aus dem Vergleich (vgl. 4) von vorgegebenen Schlupf-Sollwerten (w) und den aus den Drehzahlen ermittelten Schlupf-Istwerten (s) die Rege-

EP 0 426 745 B1

labweichungen ermittelt und nach einem vorgegebenen Regelalgorithmus (Regler 6) in Drücke umgesetzt wird, dadurch **gekennzeichnet**, daß die für die Schlupfermittlung notwendige Kupplungsabtriebsdrehzahl (n_K, n_WK) über eine Gangübersetzung (G_x) des Gangschaltgetriebes (G) und dessen Getriebeabtriebsdrehzahl (n_ab) ermittelt wird und während eines Schaltvorgangs (t_0 - t_3) ohne feste Gangübersetzung eine Ansteuerung des Stellantriebs (3) der Kupplung mit einer Zeitspanne als Totzeit (erstes Zeitintervall T_1) erfolgt, in der der Druck (p_K, p_WK) so weit abgesenkt wird, bis sich ein vorbestimmter Schlupf ergibt, und daß in dem anschließenden zweiten Zeitintervall (T_2) bis zum Zeitpunkt des neu eingelegten Ganges (t_3) der Druck (p_K) für den Stellantrieb (3) der Kupplung (K, WK) konstant (P_x) gehalten oder zeitlich gesteuert (P_y) variiert wird.

7. Verfahren zur Steuerung einer Kupplung, die zwischen einem Antriebsmotor (M) und einem Gangschaltgetriebe (G) eines Kraftfahrzeuges und als Überbrückungskupplung (WK) einer hydrodynamischen Einheit bzw. als Trennkupplung (K) ausgebildet ist mit Einrichtungen zur Ermittlung der Motor- (n_M) und der Getriebeabtriebsdrehzahl (n_ab) sowie mit einer Schlupfregelschalteinrichtung (1), die den Druck für einen Stellantrieb (3) der Kupplung (K) bzw. Überbrückungskupplung (WK) bestimmt, wobei aus dem Vergleich (vgl. 4) von vorgegebenen Schlupf-Sollwerten (w) und den aus den Drehzahlen ermittelten Schlupf-Istwerten (s) die Regelabweichungen ermittelt und nach einem vorgegebenen Regelalgorithmus (Regler 6) in Drücke umgesetzt wird, dadurch **gekennzeichnet**, daß die für die Schlupfermittlung notwendige Kupplungsabtriebsdrehzahl (n_K, n_WK) über die Gesamtübersetzung (G_x) und die Getriebeabtriebsdrehzahl (n_ab) ermittelt wird und während eines Schaltvorganges (t_0 - t_3) ohne feste Gangübersetzung eine Ansteuerung des Stellantriebs (3) der Kupplung in einer Zeitspanne als Totzeit (erstes Zeitintervall T_1) erfolgt, in der der Druck (p_K, p_WK) so weit abgesenkt wird, bis sich ein vorbestimmter Schlupf ergibt, und daß in dem anschließenden zweiten Zeitintervall (T_2) bis zum Zeitpunkt des neu eingelegten Ganges (t_3) der Druck des Stellantriebs (3) in Abhängigkeit von der Momentänderung (p_K = f (M(t_1) - M (t)), dem Moment (p_K = f (M (t)) oder der Drosselklappen- bzw. Regelstangenstellung des Antriebsmotors (M) variiert wird.

## Claims

1. Process for controlling a clutch, which is constructed between a drive motor (M) and a gear shift mechanism (G) of a motor vehicle and takes the form of a bridging clutch (WK) of a hydrodynamic unit or a disconnect-type clutch (K), having devices for ascertaining the motor speed (n_M) and the gearing output speed (n_ab) as well as having a slip control switching device (1), which determines the pressure for an actuator (3) of the clutch (K) or the bridging clutch (WK), with system deviations being detected from the comparison (cf. 4) between preselected desired slip values (w) and the actual slip values (s) ascertained from the speeds and being converted into pressures according to a preselected controller algorithm (controller 6), characterized in that a clutch output speed (n_K, n_WK) required for slip detection is determined via a gear reduction ratio (G_x) of the gear shift mechanism (G) and the latter's gearing output speed (n_ab) and during a shift process (t_0 - t_3) without a fixed gear reduction ratio activation of the clutch is effected on the basis of a virtual clutch speed n_Kvir, for which purpose a virtual reduction ratio $i\_vir(t) = i\_old \times f(t) + i\_new \times (1 - f(t))$ is determined as an intermediate variable, in which i_old is the reduction ratio of the old gear, i_new is the reduction ratio of the new gear and f(t) is a transition time function which, in the course of the gear shift (t_0 - t_3), drops from 1 to 0.

2. Process according to claim 1, characterized in that the desired slip value (w) is raised as a function of time during the shift process (t_0 - t_3).

3. Process according to claim 1, characterized in that the desired slip value (w) is raised as a function of load during the shift process (t_0 - t_3).

4. Process according to claim 1, characterized in that the transition time function (f(t)) is varied as a function of load.

5. Control device according to claim 1, characterized in that there is disposed, for calculating the clutch output speed (n_K) from the gear reduction ratio (i_gear) and the gearing output speed (n_ab), a calculation unit (7) and, for determining the virtual clutch output speed (n_Kvir), a determination unit (8) which determines said clutch output speed from the gearing output speed (n_ab), the reduction ratios of the old (i_old) and the new (i_new) gear and determines a transition time function (f(t)) when the signal for the gear reduction ratio (G_x) is not available.

6. Process for controlling a clutch, which is constructed between a drive motor (m) and a gear shift mechanism (G) of a motor vehicle and takes the form of a bridging clutch (WK) of a hydrodynamic unit or a disconnect-type clutch (K), having devices for ascertaining the motor speed (n_M) and the gearing output speed (n_ab) as well as having a slip control switching device (1), which determines the pressure for an actuator (3) of the clutch (K) or bridging clutch (WK), with system deviations being detected from the comparison (cf. 4) between preselected desired slip values (w) and the actual slip values (s) determined from the speeds and being converted into pressures according to a preselected controller algorithm (controller 6), characterized in that the clutch output speed (n_K, n_WK) required for slip detection is determined via a gear reduction ratio (G_x) of the gear shift mechanism (G) and the latter's gearing output speed (n_ab) and during a shift process (t_0 - t_3) without a fixed gear reduction ratio activation of the actuator (3) of the clutch is effected for a period as a dead time (first interval T_1), in which the pressure (p_K, p_WK) is lowered until a predetermined slip arises, and that in the subsequent second interval (T_2) up to the instant of the newly engaged gear (t_3) the pressure (p_K) for the actuator (3) of the clutch (K, WK) is held constant (P_x) or is varied in a time-controlled manner (P_y).

7. Process for controlling a clutch, which is constructed between a drive motor (M) and a gear shift mechanism (G) of a motor vehicle and takes the form of a bridging clutch (WK) of a hydrodynamic unit or a disconnect-type clutch (K), having devices for ascertaining the motor speed (n_M) and the gearing output speed (n_ab) as well as having a slip control switching device (1), which determines the pressure for an actuator (3) of the clutch (K) or bridging clutch (WK), with system deviations being detected from the comparison (cf. 4) between preselected desired slip values (w) and the actual slip values (s) determined from the speeds and being converted into pressures according to a preselected controller algorithm (controller 6), characterized in that the clutch output speed (n_K, n_WK) required for slip detection is determined via the entire reduction ratio (G_x) and the gearing output speed (n_ab) and during a shift process (t_0 - t_3) without a fixed gear reduction ratio activation of the actuator (3) of the clutch is effected in a period as a dead time (first interval T_1), in which the pressure (p_K, p_WK) is lowered until a predetermined slip arises, and that in the subsequent second interval (T_2) up to the instant of the newly engaged gear (t_3) the pressure of the actuator (3) is varied as a function of the moment change (p_K = f (M(t_1) - M (t)), the moment (p_K = f (M (t)) or the throttle valve or actuating rod position of the drive motor (M).

## Revendications

1. Procédé de commande d'un embrayage disposé entre un moteur de traction (M) et une boîte de vitesses (G) d'un véhicule automobile et formé par un embrayage de pontage (WK) d'une unité hydrodynamique ou par un embrayage de coupure (K), comportant des dispositifs pour déterminer la vitesse de rotation du moteur (n_M) et celle de sortie de boîte (n_ab), ainsi qu'un dispositif de réglage de glissement (1) qui fixe la pression destinée à un actionneur (3) de l'embrayage (K) ou de l'embrayage de pontage (WK), où les écarts de réglage sont déterminés par comparaison (comparateur 4) entre des valeurs prescrites de glissement (w) et les valeurs réelles de glissement (s) déterminées à partir des vitesses de rotation et sont convertis en pressions au moyen d'un algorithme de réglage prédéfini (régulateur 6), **caractérisé** en ce qu'une vitesse de rotation en sortie d'embrayage (n_K, n_WK), nécessaire pour déterminer le glissement, est déterminée au moyen d'un rapport de transmission (G_x) de la boîte de vitesses (G) et de la vitesse de rotation (n_ab) à la sortie de cette boîte, et en ce que, pendant un changement de vitesses (t_0 - t_3) sans rapport de transmission fixe, l'embrayage est commandé sur la base d'une vitesse de rotation virtuelle en sortie d'embrayage n_Kvir, pour laquelle on détermine, à titre de grandeur intermédiaire, un rapport de transmission virtuel $i\_vir (t) = i\_alt \times f(t) + i\_neu \times (1 - f(t))$, où i_alt est le rapport de transmission de l'ancienne vitesse, i_neu est le rapport de transmission de la nouvelle vitesse et f(t) est une fonction temporelle de transition qui décroît de 1 à 0 au cours du changement de vitesses (t_0 - t_3).

2. Procédé selon la revendication 1, **caractérisé** en ce que la valeur prescrite de glissement (w) est élevée en fonction du temps pendant le changement de vitesses (t_0 - t_3).

3. Procédé selon la revendication 1, **caractérisé** en ce que la valeur prescrite de glissement (w) est élevée en fonction de la charge pendant le changement de vitesses (t_0 - t_3).

4. Procédé selon la revendication 1, **caractérisé** en ce que la fonction temporelle de transition (f(t)) varie en fonction de la charge.

5. Dispositif de commande selon la revendication 1, **caractérisé** en ce qu'il comporte une unité de calcul (7) pour calculer la vitesse de rotation en sortie d'embrayage (n_K), à partir du rapport de transmission (i_Gang) et de la vitesse de rotation en sortie de boîte (n_ab), et une unité de détermination (8) pour déterminer la vitesse de rotation virtuelle en sortie d'embrayage (n_Kvir), à partir de la vitesse de rotation en sortie de boîte (n_ab), des rapports de transmission de l'ancienne vitesse (i_alt) et de la nouvelle (i_neu), ainsi qu'une fonction temporelle de transition (f(t)) quand le signal représentant le rapport de transmission (G_x) n'est pas à disposition.

6. Procédé de commande d'un embrayage disposé entre un moteur de traction (M) et une boîte de vitesses (G) d'un véhicule automobile et formé par un embrayage de pontage (WK) d'une unité hydrodynamique ou par un embrayage de coupure (K), comportant des dispositifs pour déterminer la vitesse de rotation du moteur (n_M) et celle de sortie de boîte (n_ab) , ainsi qu'un dispositif de réglage de glissement (1) qui fixe la pression destinée à un actionneur (3) de l'embrayage (K) ou de l'embrayage de pontage (WK), où les écarts de réglage sont déterminés par comparaison ( comparateur 4) entre des valeurs prescrites de glissement (w) et les valeurs réelles de glissement (s) déterminées à partir des vitesses de rotation et sont convertis en pressions au moyen d'un algorithme de réglage prédéfini (régulateur 6), **caractérisé** en ce que la vites se de rotation en sortie d'embrayage (n_K, n_WK), nécessaire pour déterminer le glissement, est déterminée au moyen d'un rapport de transmission (G_x) de la boîte de vitesses (G) et de la vitesse de rotation (n_ab) à la sortie de cette boîte, en ce que, pendant un changement de vitesses (t_0 - t_3) sans rapport de transmission fixe, l'actionneur (3) de l'embrayage est commandé avec un laps de temps servant de temps mort (premier intervalle de temps T_1), dans lequel la pression (p_K, p_WK) est abaissée jusqu'à ce que se produise un glissement prédéterminé, et en ce que, dans le. second intervalle de temps suivant (T_2) et jusqu'au moment (t_3) de l'engagement de la nouvelle vitesse, la pression (p_K, p_WK) destinée à l'actionneur (3) de l'embrayage (K, WK) est maintenue constante (P_x) ou est commandée de manière variable avec le temps (P_y).

7. Procédé de commande d'un embrayage disposé entre un moteur de traction (M) et une boîte de vitesses (G) d'un véhicule automobile et formé par un embrayage de pontage (WK) d'une unité hydrodynamique ou par un embrayage de coupure (K), comportant des dispositifs pour déterminer la vitesse de rotation du moteur (n_M) et celle de sortie de boîte (n_ab), ainsi qu'un dispositif de réglage de glissement (1) qui fixe la pression destinée à un actionneur (3) de l'embrayage (K) ou de l'embrayage de pontage (WK), où les écarts de réglage sont déterminés par comparaison (comparateur 4) entre des valeurs prescrites de glissement (w) et les valeurs réelles de glissement (s) déterminées à partir des vitesses de rotation et sont convertis en pressions au moyen d'un algorithme de réglage prédéfini (régulateur 6), **caractérisé** en ce que la vitesse de rotation en sortie d'embrayage (n_K, n_WK), nécessaire pour déterminer le glissement, est déterminée au moyen du rapport de transmission global (G_x) et de la vitesse de rotation (n_ab) à la sortie de la boîte de vitesses, en ce que, pendant un changement de vitesses (t_0 - t_3) sans rapport de transmission fixe, l'actionneur (3) de l'embrayage est commandé avec un laps de temps servant de temps mort (premier intervalle de temps T_1), dans lequel la pression (p_K, p_WK) est abaissée jusqu'à ce que se produise un glissement prédéterminé, et en ce que, dans le second intervalle de temps suivant (T_2) et jusqu'au moment (t_3) de l'engagement de la nouvelle vitesse, la pression de l'actionneur (3) est commandée de manière variable en fonction de la variation de couple (p_K = f(M(t_1) - M(t)), du couple (p_K = f(M(t)) ou de la position du papillon des gaz ou de la tige de réglage du moteur de traction (M).

FIG.1

FIG.4.

i_neu

i_vir

i_alt

T_3

T_2

T_1

t_0  t_1  t_2  t_3  t

i

FIG.3

P_y

P_X

P_Z

P_K ; P_WK

t_0  t_1  t_2  t_3  t

T_1  T_2

n_M

n_ab

k_1;WK_1

3

p_1

60

n_M

α_DK

f(t)

FIG.2